# EUROPEAN PATENT APPLICATION

(11) **EP 1 039 171 A2**
(43) Date of publication of application: **27.09.2000**
(21) Application number: 00200911.6
(22) Date of filing: 14.03.2000
(51) Int. Cl.: F16H 3/093

(54) **Gearbox, in particular for motorcycles**

(30) Priority: 19.03.1999 IT MI990557
(71) Applicant: Moto Guzzi S.p.A., 23826 Mandello del Lario (IT)
(72) Inventor: Todero, Umberto, 23826 Mandello del Lario (Lecco) (IT)
(74) Representative: Parisi, Luigi

(57) **Abstract**

A longitudinal gearbox (11), in particular for motorcycles, comprises a housing (12) in which there is accommodated a drive or primary shaft (15), which can be rotated by an engine, and is associated with a secondary shaft (45). Inside the housing (12), there are also accommodated a first (19) and a second (20) return shaft, which support respectively idle first (17) and second (18) gears, each of which engages with drive gears (16), which are keyed onto the primary shaft (15). On the first (19) and on the second (20) return shaft, there is also keyed a return gear (29), which engages with a corresponding return gear (44), which is keyed onto the secondary shaft (45). In addition, the first (19) and the second (20) return shaft support clutches (21, 22, 48, 49), which can lock one of the first (17) or second (18) gears alternatively, in order to permit the transmission of motion from the primary shaft (15) to the secondary shaft (45), with a specific transmission ratio.

## Description

The present invention relates to a longitudinal gearbox, in particular for motorcycles. In particular, it relates to a gearbox of the type with gears which are continually engaged, and has a structure which is longitudinal relative to the direction of travel.

In the field of motor cycling, the applications of longitudinal gearboxes are infrequent, since in most cases, an engine is fitted transversely, and consequently it is convenient to fit the gearbox in a similar transverse position, using a pair of gears as the primary transmission unit. In addition to this reason, there is the fact that widespread use of a chain-type transmission unit makes this solution more convenient still. On the other hand, a longitudinal gearbox is convenient from a mechanical point of view in cases in which there are transmission units with a shaft and/or propulsors which are fitted longitudinally. In the case of a transverse engine and shaft-type transmission unit, it is usually opted to use a transverse gearbox (owing to its reduced longitudinal dimensions), and the motion is inverted at the output of the gearbox, by means of a bevel gear pair. In the case of a longitudinal engine and a shaft-type transmission unit, the solution with a longitudinal gearbox becomes necessary, since, if the solution with a transverse gearbox is adopted, there would be introduction of unjustifiable mechanical complexities and increases in weight.

As a result of the large size both of the engine and of the gearbox fitted longitudinally, the controllability of the motorcycles on which this solution is adopted is often limited, owing to the long wheelbase of the motorcycles. In this circumstance, it is difficult to shorten the engine, whereas fewer constraints exist concerning the gearbox, although those which do exist are associated with the size of the gears and the corresponding clutches.

It is known that the conventional longitudinal gearboxes usually comprise a drive shaft or primary shaft, onto which there are keyed primary gears of the gearbox. Each of these gears engages with a second gear, which is supported in an idle manner by a secondary shaft, by means of which the motion is transmitted to a drive wheel of the motorcycle. The motion is transmitted from the primary shaft to the secondary shaft by locking one of the second gears alternatively on the secondary shaft, such that the motion which the latter receives from the primary shaft via one of the primary gears is transmitted to the secondary shaft itself. This function is carried out by locking devices or clutches. The clutches usually consist of sliding couplings, which are provided with toothed portions which can be connected to corresponding tooth portions of each of the second gears. By this means, when the toothed portion of a coupling engages with a corresponding toothed portion of a gear, this gear is locked onto its own shaft, and permits transfer of the motion from the primary shaft to the secondary shaft, with a transmission ratio which is pre-defined and determined by the pair of gears which are connected and locked.

It is well known that these conventional longitudinal gearboxes involve the fact that the delimiting dimensions, in particular the longitudinal dimensions, are very large, which has direct consequences on the characteristics of the motorcycle, such as its dimensions, its wheel base, and consequently its controllability. This is the case since the longitudinal dimensions of the conventional gearboxes are closely associated with the number and dimensions of the gears and clutches. For example, in a typical embodiment with six speeds, the longitudinal dimensions of the conventional gearbox are determined by the presence on the secondary shaft of six gears and three clutches.

The object of the present invention is to eliminate the above-described technical disadvantages, by providing a longitudinal gearbox, in particular for motorcycles, which is compact and has dimensions which are limited, in particular along its own longitudinal direction.

A further object of the invention is to provide a longitudinal gearbox which is substantially simple, safe and reliable.

This and other objectives of the present invention are achieved by providing a longitudinal gearbox, in particular for motorcycles, according to Claim 1.

Other characteristics of the present invention are also defined in the successive claims.

Further characteristics and advantages of a longitudinal gearbox according to the present invention, in particular for motorcycles, will become more apparent from the following description, provided by way of non-limiting example, with reference to the attached schematic drawings, in which:
Figure 1 shows a view in front elevation of a gearbox according to the invention, without a front closing wall of a housing; and

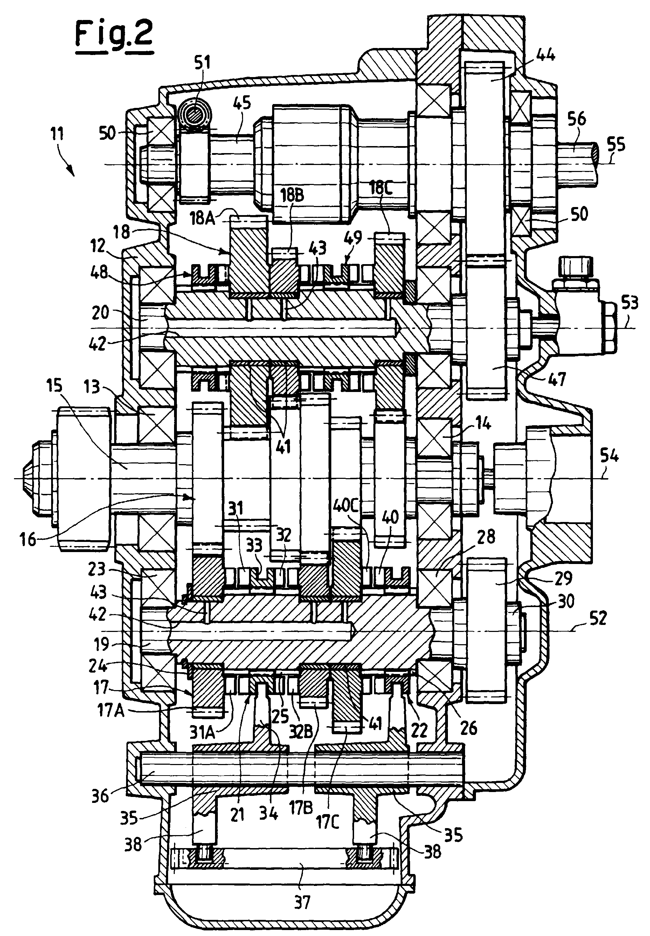

Figure 2 is a plan view in cross-section of a gearbox shown in Figure 1.

The aforementioned Figures show a longitudinal gearbox, in particular for motorcycles, which is indicated as a whole by the number 11.

The gearbox 11 comprises a housing 12, in the interior of which a primary shaft 15 is accommodated by means of bearings 13, 14. One end of the shaft 15 projects from the housing 12, in order to be rotated by an engine (not shown) via a clutch (not shown) in a known manner.

On the shaft 15, between the pair of bearings 13, 14, there are keyed drive gears 16, of which six are shown in the example. The gears 16 are permanently connected to, and engaged with gears 17, 18, which are supported in an idle manner respectively by a first 19 and by a second 20 return shaft, which are also accommodated inside the housing 12. These gears 16, 17, 18 define six different transmission ratios between the primary shaft 15 and the return shafts 19, 20.

The return shaft 19 supports the gears 17, of which there are three, and also supports clutches 21, 22, which can lock the gears 17 onto the shaft 19.

One end of the shaft 19 is supported by a bearing 23. Adjacent to the latter there is fitted a ring 24, which prevents longitudinal translations of a gear 17A (fourth speed), which is idle on the shaft 19. The gear 17A abuts an enlarged, grooved portion 25 of the shaft 19, which supports the clutch 21. Between the portion 25 and a second enlarged, grooved portion 26, the shaft 19 supports idle gears 17B (sixth speed) and 17C (second speed). This second enlarged, grooved portion 26 is produced for example by keying a bush onto the shaft 19. The enlarged, grooved portion 26 supports the second clutch 22. The shaft 19 is supported by a second bearing 28, which abuts the portion 26, and finally, adjacent to the bearing 28, on the shaft 19, there is keyed a return gear 29, which is locked by means of a threaded ring nut 30, which is connected to a likewise threaded end of the shaft 19.

The clutch 21 comprises a grooved ring, with a through hole which is grooved and is inserted on the grooved portion 25, such as to be able to slide only along a longitudinal direction of the shaft 19. The ring 21 is interposed between the gears 17A and 17B, and, integral with its own opposite front portions, supports a pair of teeth 31, 32. These teeth 31, 32 can be connected to conjugated teeth 31A, 32B which face the latter, and are integral respectively with front portions of the gear 17A and 17B. The ring 21 has a circumferential groove 33 provided along its outer perimeter edge, in which there are inserted shaped ends of a fork-type component 34. The fork-type component 34 constitutes a control unit for actuation in translation of the clutch 21. In addition, the fork-type component 34 is integral with a coupling 35, which slides on a fixed shaft or guide 36, which is integral with the housing 12. The coupling 35 can be actuated in translation by being controlled by a cam-type mechanism 37, to which it is connected via its own projections 38.

The clutch 22 can slide on the portion 26, and is similar to the clutch 21 previously described, differing from the latter only in that the ring 22 which constitutes it has a single front toothing 40, which faces toothing 40C of the gear 17C.

The gears 17A, 17B, 17C are supported by the shaft 19 with bushes 41 interposed. The latter are lubricated via a longitudinal blind hole 42, which at the gears 17A, 17B, 17C is connected to the bushes 41 via radial holes 43.

The return gear 29 is permanently connected to a return gear 44, which is keyed onto a secondary shaft 45.

The second return shaft 20 is substantially similar to the shaft 19. In particular, the shaft 20 supports the gears 18A (first speed), 18B (fifth speed), 18C (third speed), which are idle on the shaft 20, and a return gear 47 which is integral with the shaft 20, and is permanently connected to the return gear 44 of a secondary shaft 45. A clutch 48 is supported to the front of the gear 18A, and a further clutch 49 is supported interposed between the gears 18B, 18C. The clutches 48, 49 are disposed at portions of the shaft 20 which face the gears 17, which are supported by the shaft 19, and vice versa.

The secondary shaft 45 is supported by bearings 50, and, in addition to the gear 29, supports gears 51 to control a speedometer.

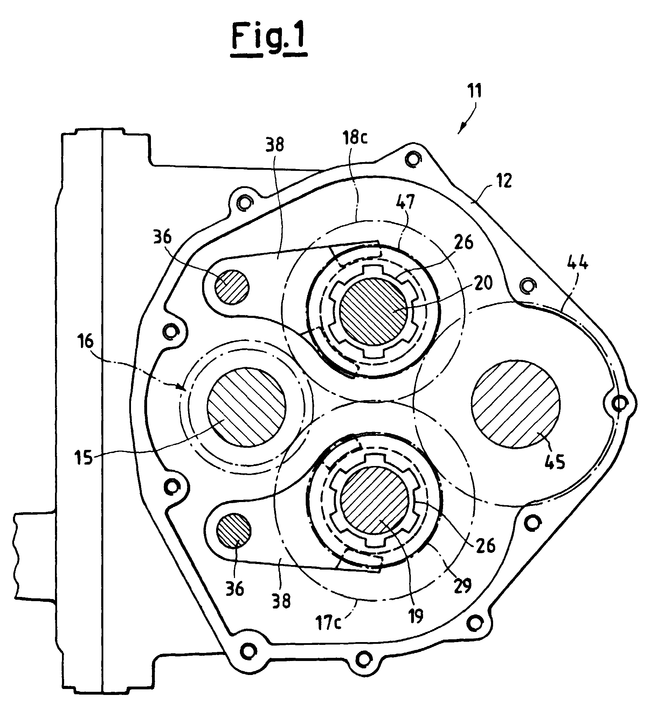

The return shafts 19 and 20 have axes 52, 53 which are parallel to one another. The axes 52 and 53 are parallel to an axis 54 of the primary shaft 15, and are spaced equally from the latter. In addition, the return shafts 19 and 20 have axes 52, 53 which are parallel and are also equally spaced relative to an axis 55 of the secondary shaft 45. As shown in Figure 1, the axis 54 of the shaft 15 and the axes 52, 53 of the shafts 19, 20 are disposed according to the vertices of a triangle, such as to provide the gearbox according to the invention with a compact configuration. In the same manner, the axis 55 of the shaft 45 and the axes 52, 53 of the shafts 19, 20 are disposed according to the vertices of a triangle.

Motion is transmitted to wheels of a motorcycle (not shown) by connecting one end 56 of the shaft 45, which projects from the housing 12, to a transmission unit (not shown).

The longitudinal gearbox 11 according to the invention, in particular for motorcycles, functions substantially as follows.

The primary shaft 15 rotates, actuated by the engine via the clutch, together with all the gears 16 which are integral with it. The gears 16 rotate the idle gears 17 and 18 which are supported by the return shafts 19, 20.

When all the toothing 31, 32, 40 of the clutches 21, 22, 48, 49 is disengaged from the corresponding front toothing 31A, 32B, 40C of the gears 17, 18, there is no transmission of motion between the primary shaft 15 and the return shafts 19, 20, or consequently between the primary shaft 15 and the secondary shaft 45.

When one of the clutches 21, 22, 48, 49 engages its own toothing 31, 32, 40 with the corresponding toothing 31A, 32B, 40C of one of the gears 17, 18, the corresponding gear is locked onto its own shaft, which can thus rotate, actuated by the primary shaft 15.

In particular, the attached Figures show the gearbox 11, in which the first speed is engaged (the clutch 48 is translated, and its toothing 31 is engaged in the toothing 31A of the gear 18A).

In this situation, via the clutch, the engine rotates the primary shaft 15, and thus all the gears 16 which are supported by the latter. The gears 16 rotate all the gears 17, 18. In the situation described and shown in the attached Figures, the gears 17 and the gears 18B, 18C rotate in an idle manner on their own shaft 19 or 20, whereas the gear 18A which is rendered integral with the shaft 20 via the clutch 48, rotates the shaft 20 itself. The motion of the shaft 20 is transmitted via the return gear 47 which is keyed onto the latter, to the gear 44, which rotates the secondary shaft 45. In turn, the gear 44 of the shaft 45 rotates the gear 29 of the return shaft 19, thus also rotating the latter.

It has been found in practice that the longitudinal gearbox according to the invention, in particular for motorcycles, is particularly advantageous, because it makes it possible to limit the longitudinal dimensions of the gearbox. It is thus possible to produce motorcycles, which, although they have a longitudinal gearbox, by means of the corresponding advantages have a gearbox with dimensions equivalent to those of a transverse gearbox.

The longitudinal gearbox, in particular for motorcycles, thus designed, can be subjected to many modifications and variants, all of which come within the scope of the invention; in addition, all the details can be replaced by technically equivalent components.

In practice, any materials and dimensions can be used, according to the technical requirements.

## Claims

1. Longitudinal gearbox (11), in particular for motorcycles, comprising a housing (12) in which there is accommodated a drive shaft or a primary shaft (15), which can be rotated by an engine, the said primary shaft (15) being associated with a secondary shaft (45), characterised in that, inside the said housing (12) there are accommodated at least one first (19) and one second (20) return shaft, the said first (19) and second (20) return shafts supporting respectively idle first (17) and second (18) gears, each of the said idle gears (17, 18) engaging with drive gears (16) which are keyed onto the said primary shaft (15), in addition, on the said first (19) and second (20) return shaft, there is keyed one return gear (29, 47), which engages with a corresponding return gear (44) which is keyed onto the said secondary shaft (45), and in addition the said first (19) and the said second (20) return shafts support clutches (21, 22, 48, 49), which can lock one of the said first (17) or the said second (18) gears alternatively, such that, when the said clutches (21, 22, 48, 49) lock the said first (17) or the said second (18) gears, motion is transmitted from the said primary shaft (15) to the said secondary shaft (45), with a specific transmission ratio.

2. Longitudinal gearbox (11) according to Claim 1, characterised in that the said clutches (21, 22, 48, 49) comprise rings which slide longitudinally relative to the said first (19) and second (20) return shafts, the said rings having in their own front portions first toothing (31, 32, 40) which can engage with corresponding second toothing (31A, 32B, 40C) which is integral with front portions of the said first (17) and second (18) gears, such that when one of the said first toothings (31, 32, 40) of one of the said rings engages with the said corresponding second toothing (31A, 32B, 40C) of one of the said first (17) or second (18) gears, this gear (17, 18) is locked on the said first (19) or second (20) return shaft.

3. Longitudinal gearbox (11) according to Claim 2, characterised in that the said rings (21, 22, 48, 49) each have a grooved through hole.

4. Longitudinal gearbox (11) according to Claim 2, characterised in that the said rings (21, 22, 48, 49) are associated with at least one control unit (34), such that they can be actuated in translation, the said control unit (34) being connected in a sliding manner to at least one guide (36), which is connected to the said housing (12).

5. Longitudinal gearbox (11) according to Claim 4, characterised in that the said rings (21, 22, 48, 49) each have at least one portion which is provided with at least one circumferential groove (33) along the outer edge, portions of a fork-type component of the said control unit (34) being inserted in the said groove (33).

6. Longitudinal gearbox (11) according to Claim 2, characterised in that at least one of the said rings (21, 22, 48, 49) is interposed between two gears (17A, 17B, 17C, 18A, 18B, 18C) of the said first (17) or second (18) gears, the said interposed ring (21, 22, 48, 49) having the said first toothing (31, 32, 40) on both the said front portions.

7. Longitudinal gearbox (11) according to Claim 1, characterised in that the said first (19) and second (20) return shafts have axes (52, 53) which are parallel to an axis (54) of the said primary shaft (15), and are also equally spaced from the latter.

8. Longitudinal gearbox (11) according to Claim 7, characterised in that the said first (19) and second (20) return shafts have axes (52, 53) which are parallel to an axis (55) of the said secondary shaft (45).

9. Longitudinal gearbox (11) according to Claim 8, characterised in that the said first (19) and second (20) return shafts are equally spaced from the said secondary shaft (45).

10. Longitudinal gearbox (11) according to Claim 1, characterised in that an axis (54) of the said primary shaft (15) and axes (52, 53) of the said return shafts (19, 20) are disposed according to vertices of a triangle, such as to provide the gearbox according to the invention with a compact configuration.

11. Longitudinal gearbox (11) according to Claim 1, characterised in that an axis (55) of the said secondary shaft (45), and axes (52, 53) of the said return shafts (19, 20) are disposed according to vertices of a triangle.
